(19) Europäisches Patentamt
European Patent Office
Office européen des brevets

(11) **EP 4 083 918 A1**

(12) **EUROPEAN PATENT APPLICATION**

(43) Date of publication:
**02.11.2022 Bulletin 2022/44**

(21) Application number: **21170737.7**

(22) Date of filing: **27.04.2021**

(51) International Patent Classification (IPC):
**G06T 7/62** (2017.01)

(52) Cooperative Patent Classification (CPC):
**G06T 7/62;** G06T 2207/10028; G06T 2207/30196;
G06T 2219/2021

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Reactive Reality AG
8010 Graz (AT)**

(72) Inventors:
• **Pilz, Alexander
8160 Thannhausen (AT)**

• **Riedler, Günter
8160 Thannhausen (AT)**
• **Grasmug, Philipp
8010 Graz (AT)**
• **Hauswiesner, Stefan
8182 Puch bei Weiz (AT)**

(74) Representative: **Epping - Hermann - Fischer
Patentanwaltsgesellschaft mbH
Schloßschmidstraße 5
80639 München (DE)**

(54) **METHOD AND COMPUTER PROGRAM PRODUCT FOR PERFORMING AT LEAST ONE MEASUREMENT ON A 3D RECONSTRUCTION OF A BODY**

(57)    A method for performing at least one measurement on a 3D reconstruction of a body using a computer system is disclosed, given a parametric body model, PBM, template and a measurement definition. The PBM template is adapted to be parametrized at least with respect to shape and pose. The measurement definition defines one or more measurement instructions. A PBM instance is generated by fitting the PBM template to the 3D reconstruction at least with respect to a body pose and a body shape. The one or more measurement instructions are mapped to the PBM instance, and a measurement according to at least one of the one or more mapped measurement instructions is performed. At least one measurement instruction of the one or more measurement instructions is given as one of a definition of one or more segments between respective measurement points, a definition of a cycle and a definition of a volume.

**Fig 1**

**Description**

FIELD OF THE INVENTION

The present disclosure relates to a computer implemented method and to a computer program product for performing at least one measurement on a 3-dimensional, 3D, reconstruction of a body.

BACKGROUND

Obtaining accurate body measurements of people is critically important to a number of applications, in particular fashion e-commerce. When shopping for clothes and accessories online, choosing the correct size is a key challenge and impacts customer satisfaction and product return rates. Providing good size recommendations requires accurate body measurements.

Human body shapes are soft and articulated, which makes them hard to measure reliably. The standard way of taking body measurements is by applying a measuring tape at specified locations (e.g. waist circumference, shoulder width etc.). It has been found that the inter-person variability of tape measurements is high, leading to measurement errors of up to 2 garment confection sizes. As a result, tape measurements are unusable for e-commerce applications and lead to high product return rates.

The challenge of reliable real-life body measurement is to consistently find landmarks on the human body, e.g. the shoulder tips, the waist line, ankles and wrists etc. People struggle at identifying many of these landmarks without special training, and different people will locate landmarks differently.

SUMMARY OF THE INVENTION

An object to be achieved is to provide an improved measuring concept that allows a reasonable measurement of various measures on a 3D reconstruction of a body.

This object is achieved with the subject-matter of the independent claims. Embodiments and developments derive from the dependent claims.

The improved measuring concept is based on the idea of reliably applying a "human-shaped template", i.e. a parametric body model, to a 3D representation or reconstruction of the user. Hence, the improved measuring concept allows to define measurement paths which yield stable measurement values even when the underlying 3D reconstruction changes slightly from one 3D scan to another. As a consequence, the improved measuring concept is much more reliable and accurate than humans with a tape measure. An unlimited number of complex measurement paths can be defined, even allowing the system to take volumetric measurements e.g. for bra cup size recommendations. This enables fashion designers and retailers to give much more accurate size recommendations.

To this end, the improved measuring concept proposes an automated procedure based on the following steps:

1. A 3D reconstruction of the individual, e.g. as point cloud, volume or mesh etc. is created.
2. A parametric body model, PBM, template is fitted to the 3D reconstruction.
3. Measurements defined on the PBM template are transferred to the fitted PBM instance and/or the 3D reconstruction.
4. The measurements are performed and can be evaluated and presented to a user.

Objects, including human bodies, can be scanned and transformed into computer data sets using various state-of-the-art methods, e.g., photogrammetry, depth sensor scans or tomography. Such data sets then represent the scanned object and can be called a 3D reconstruction of a body or body reconstruction.

The improved measuring concept relies on a parametric body model, PBM, which is a 3D computer model of a generic body, in particular a human body. Such body models are usually either hand-crafted or created from large data sets of 3D scans of actual humans. This model can be parameterized, i.e., its shape as well as its pose is given by a set of parameters. Such parameters may include the body height, the length of arms, the size of thighs, or the shoulder width for defining the shape, or the angle in which certain joints like elbows or knees etc. are bent, and in which direction the pose is defined. By setting these parameters, a human operator or a computer program can arbitrarily create many 3D models that resemble human bodies, not only in visual appearance but also in terms of proportions. In contrast to the body reconstruction, the PBM template may carry rich semantic information.

For example, the improved measuring concept implements a method for performing at least one measurement on a 3D reconstruction of a body using a computer system. The computer system has access to a PBM template and to a measurement definition. The PBM template comprises a representation of a surface of a template body. The PBM template is adapted to be parametrized at least with respect to shape and pose. The measurement definition defines one or more measurement instructions that are each associated with at least one measurement point defined with respect to the PBM template.

The PBM template may further comprise a representation of an armature or a skeleton of the template body and/or semantic information of the template body. For example, the semantic information may define associations between parts of the surface and the armature or skeleton. It may also define associations to body parts and/or landmarks on the body, to name only a few. The PBM template may further be adapted to be parametrized with respect to sizes of body parts and/or angles of joints, which e.g. further defines shape and pose.

The method comprises receiving the 3D reconstruction, generating a PBM instance by fitting the PBM template to the 3D reconstruction at least with respect to a body pose and a body shape and mapping the one or more measurement instructions to the PBM instance. Fitting the PBM template may also include fitting with respect to a bone length, for example. A measurement according to at least one of the one or more mapped measurement instructions is performed.

At least one measurement instruction, e.g. each measurement instruction of the one or more measurement instructions, is given as one of the following:

a) A definition of one or more segments between respective measurement points that are defined with respect to the PBM template. In this case mapping said at least one measurement instruction to the PBM instance includes mapping of said respective measurement points to the PBM instance.

b) A definition of a cycle based on an intersection between a surface of the PBM template and a plane defined in relation to an anchor measurement point that is defined with respect to the PBM template. In this case mapping said at least one measurement instruction to the PBM instance includes mapping of said anchor measurement point to the PBM instance.

c) A definition of a volume limited by a defined part of a surface of the PBM template and a two-dimensional boundary intersecting with the surface, the boundary being defined in relation to an anchor measurement point that is defined with respect to the PBM template. In this case mapping said at least one measurement instruction to the PBM instance includes mapping of said anchor measurement point to the PBM instance.

Accordingly, the different definitions of measurement instructions can be used for performing distance measurements, surface area measurements and measurements of volume of parts of the body. Furthermore, from these measurements, further measurements may be obtained, e.g. a volume measurement can be used to estimate the weight of a body part.

Length and circumference measurements are classic measurements in dressmaking, which comprise measurements like the arm length or the waist circumference, for example. In conventional, real-life measurements, these are taken using a measurement tape. According to the improved measuring concept, the measurement is, for example, done along one-dimensional paths that resemble the position of the measurement tape, as defined with a corresponding measurement instruction. For example, length measurements have two fixed endpoints, while circumference measurements may also be defined by points on or close to their path.

For example, length measurements can be defined as a combination of one or more segments. For example, the arm length can be measured by combining a segment measuring the lower arm length with one that measures the upper arm length. According to the improved measuring concept a segment is a one-dimensional path between two measurement points defined in the PBM template, respectively after the mapping process, in the PBM instance.

For example, in an implementation where at least one of the measurement instructions is given as the definition of one or more segments, mapping the one or more measurement instructions to the PBM instance may comprise mapping a path, e.g..a complete path, of at least one of the one or more segments as defined with respect to the PBM template to the PBM instance. For example, the path is defined as a set of points on or in conjunction with the PBM template. These points may be expressed as specific vertices on the PBM template, e.g. in the case that the PBM template includes a definition of a surface mesh with corresponding vertices defined on the mesh. However, these points may not only be vertices, but could also be points computed from vertex positions, e.g. using barycentric coordinates. These points or vertices can be mapped to the PBM instance, e.g. through the correspondence of points, respectively, vertices between PBM template and PBM instance.

In addition, or as an alternative, mapping said one or more measurement instructions to the PBM instance may comprise mapping said respective measurement points to the PBM instance and computing a path of at least one of the one or more segments, which are defined between the respective measurement points, using the PBM instance and the respective mapped measurement points. In the latter implementation only the measurement points themselves are mapped to the PBM instance such that a path of the segment can be calculated on the PBM instance. The respective measurement instruction may include information on how to compute the path between the measurement points, e.g. as the shortest part on the surface of the PBM instance between the measurement points. In particular, the information to compute the path between measurement points may also comprise points that are mapped from the PBM template to the PBM instance. Other path definitions should not be excluded by this example.

If the respective measurement instruction comprises more than one segment, each segment may be mapped individually according to one of the described ways of mapping. Hence, a definition of the measurement instruction regarding the segments can be made flexibly depending, e.g., on the body part on which the respective segment is located.

A measurement instruction that defines a cycle can be used, for example, for a circumference measurement or for a surface area measurement. In both applications a cycle defines a closed path on the surface of the PBM template, respectively PBM instance.

It should be noted that a cycle could also be defined by a plurality of consecutive segments, where for example a starting measurement point of the first segment corresponds to the ending measurement point of the last segment to close the cycle. This allows to define cycles that are not completely represented in a plane. Hence, for cycles defined by segments all respective applicable implementations can be used.

In implementations where one of the measurement instructions is given as the definition of a volume being limited by a defined part of a surface of the PBM template and a two-dimensional boundary intersecting with the surface, said two-dimensional boundary intersecting with the surface may be defined as an intersection of a plane with the surface, the plane being associated with the anchor measurement point. For example, the anchor measurement point is part of the plane, respectively lies in the plane. However, the anchor measurement point may also define a point in space that is distant to the plane. Such distance can be based on a rule or instruction that is part of the respective measurement instruction.

The definition of the intersection of the plane with the surface may include information about a point on the surface of the PBM template, respectively PBM instance, that identifies the part of the surface that should be limiting the volume. This may be helpful in order to avoid ambiguities in case the plane intersects the PBM template, respectively PBM instance, in multiple parts.

In an alternative or additional way of defining the two-dimensional boundary, the boundary may be defined as a cycle on the surface and an auxiliary surface limited by the cycle, wherein the cycle is defined in the respective measurement instruction. For example, if the cycle lies on a plane, the definition may be more or less equivalent to the previous one. However, if this is not the case, e.g. when the cycle is defined as a locally shortest cycle, or by a sequence of several non-coplanar segments, the respective measurement instruction may define a canonical way of closing the surface defined by the cycle, e.g. making it watertight, such that a volume is defined.

Another variant of defining the volume measurement would be to consider the surface part as a container, and compute the largest amount of a (virtual) liquid it can hold when in the right position. Algorithmically, this amounts to finding a plane that separates the space such that the defining cycle is in one half space and the volume defined by the plane at the surface in other half space is maximal.

In various implementations the measurement as defined by the measurement instruction may depend on the pose of the body during measurement. For example, at least one measurement instruction of the one or more measurement instructions comprises pose information, and before performing the measurement according to the at least one mapped measurement instruction comprising pose information, a pose of the PBM instance is adjusted based on the pose information. For example, an angle of one or more joints of the PBM template, respectively the PBM instance, may be adjusted according to the pose information contained in the measurement instruction.

In various embodiments at least one measurement instruction of the one or more measurement instructions is based on semantic information of the template body contained in the PBM template. For example, an association of the at least one associated measurement point to a region defined by the semantic information is made. This may achieve that the mapping of the at least one measurement point correctly resembles the semantic information such that, for example, the mapping occurs on the correct body part or the like, whatever is defined by the semantic information.

In various implementations the 3D reconstruction may comprise a plurality of landmarks, wherein generating the PBM instance is based on the plurality of landmarks. For example, such landmarks define special points on the body, e.g. the position of joints or body parts like eyes, nose, ears, breasts, hips, etc. Knowledge of the landmarks may improve the fitting of the PBM template to the 3D reconstruction.

For example, the improved measuring concept may include detecting the plurality of landmarks based on data of the 3D reconstruction using a machine learning process. Such data may not only include the surface information of the 3D reconstruction but also raw data like images that are the basis for the 3D reconstruction.

Such a machine learning algorithm may be pre-trained with a plurality of corresponding data sets including landmark information. For example, whenever a measurement point associated with one of the measurement instructions is mapped to the PBM instance, this mapping can be based on semantic information of the template body and on at least one of the plurality of landmarks. Hence, a correspondence between the semantic information and the information as defined by the landmarks can be used.

In the above description the measurement instructions are mapped to the PBM instance to perform the measurement on the PBM instance. However, in some implementations at least one of the measurement instructions is mapped to the body reconstruction, wherein the at least one associated measurement point of said measurement instruction is included in the mapping. For example, the mapping of the measurement point is made to a surface of the body reconstruction. Accordingly, a measurement according to the at least one measurement instruction mapped to the body reconstruction can be performed. This may allow a more realistic measurement, as the 3D reconstruction is derived more directly from the body. However, this may also depend on the body part on which the measurement is to be performed.

In various applications receiving the body reconstruction comprises receiving a reference measure of the body reconstruction. For example, if the body reconstruction is achieved via an image based procedure like photogrammetry, a reference measure like a body height may be useful for a realistic measurement. However, in some cases where the body reconstruction is e.g. retrieved via computed tomography, CT, a real-life measurement relation is already included in the body reconstruction.

In some implementations the measurement definition defines two or more measurement instructions. For example, the two or more measurement instructions are mapped to the PBM instance and/or to the body reconstruction. Measurements are performed according to the two or more mapped measurement instructions. A validity measure of the measurements can then be generated by relating the measurements, e.g. based on a statistic method and/or an artificial neural network evaluation. This, for example, allows to identify outliers or wrong measurements or the like, that may even be corrected accordingly. For example, if the same or a similar measurement is performed on both the PBM instance and the body reconstruction, the more reasonable result can be determined and used as the measurement result.

In the various implementations the representation of the surface of the PBM template may be implemented with a 3D mesh and associated vertices. Fitting the PBM template to the 3D reconstruction may include changing positions of the vertices. For example, the changed positions do not change the structure of the mesh such that, e.g. the number of vertices and their interconnections in the mesh remain the same between PBM template and PBM instance. This may support mapping of points, in particular measurement points, from the PBM template to the PBM instance.

In various implementations at least one of the measurement instructions is associated with the PBM template and with a 3D representation of a garment or at least a portion of the 3D representation of the garment. Hence, a result of the measurement performed according to said measurement instruction is adapted to be used during production of a piece of the garment. For example, a length measurement on the PBM template, respectively PBM instance, is associated with a length of cloth needed for the production of the piece of the garment, e.g. for cutting the cloth.

According to one embodiment of the improved measuring concept, a computer program product for performing at least one measurement on a 3D reconstruction of a body comprises a non-transitory computer-readable storage medium and computer program instructions stored therein, enabling a computer system to execute a method according to one of the implementations described above.

Furthermore, a computer system may have a processor and a storage medium having computer program instructions stored therein, enabling the processor to execute a method according to one of the implementations described above.

BRIEF DESCRIPTION OF THE DRAWINGS

The improved measuring concept will be explained in more detail in the following with the aid of the drawings. Elements and functional blocks having the same or similar function bear the same reference numerals throughout the drawings. Hence their description is not necessarily repeated in following drawings.

In the drawings:

Figure 1        shows an example measurement flow of the improved measuring concept;

Figure 2        shows example camera configurations for achieving a 3D reconstruction;

Figure 3        shows different views of an example of a 3D reconstruction as a polygonal 3-dimensional mesh together with a parametric body model to be fitted;

Figures 4 to 8     show example visualizations of measurement instructions;

Figure 9        shows an example flow of mapping of measurement instructions; and

Figure 10      shows an example system for performing at least one measurement on a 3D reconstruction of a body according to the improved measuring concept.

DETAILED DESCRIPTION

The improved measuring concept is based on the idea of reliably applying a "human-shaped template", i.e. a parametric body model, to a 3D representation or reconstruction of the user. Hence, the improved measuring concept allows to define measurement paths which yield stable measurement values even when the underlying 3D reconstruction changes slightly from one 3D scan to another. As a consequence, the improved measuring concept is much more reliable and accurate than humans with a tape measure. This enables fashion designers and retailers to give much more accurate size recommendations.

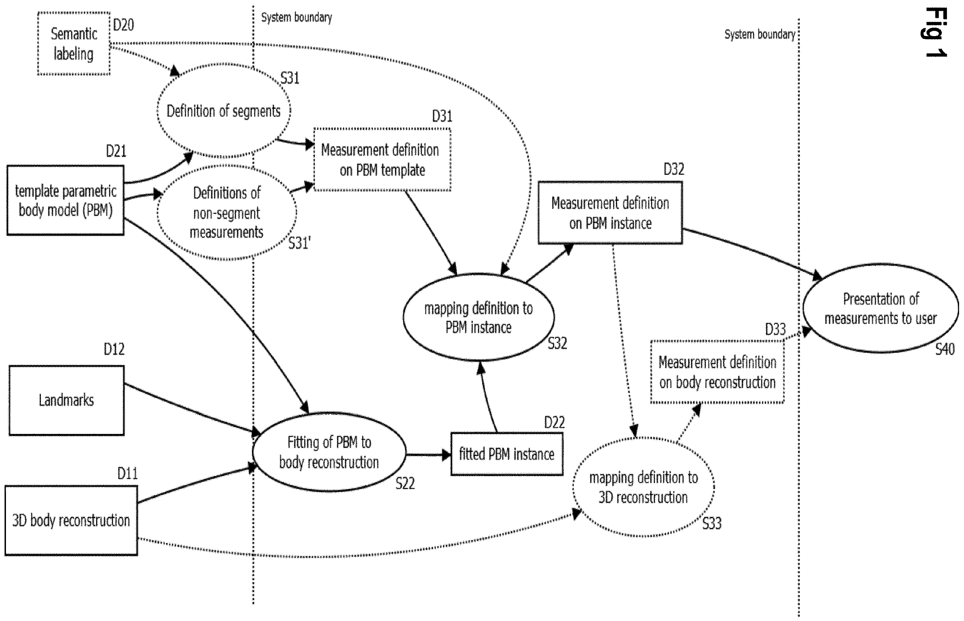

Figure 1 shows an example measurement flow according to the improved measuring concept. It describes how at least one measurement on a 3D reconstruction of a body, e.g. a human body, can be performed using a computer system. To this end a 3D reconstruction of an individual body is created, e.g. as a point cloud, a volume or a 3D mesh. This 3D reconstruction is provided as a 3D body reconstruction D11.

Objects, including human bodies, can be scanned and transformed into computer data sets using various state-of-the-art methods, e.g., photogrammetry, depth sensor scans or tomography. Such data sets then represent the scanned object in various ways, e.g.

- as a set of points in 3D that represent points on the object surface, possibly enriched with a surface normal vector,
- as the visual hull of the object, i.e., the intersection of cones that originate at camera positions and cover the estimated outline of the object,
- as volume data giving a discrete set of points inside the object, or
- by a (usually triangular) mesh representing the surface of the object.

The present description focuses on creation of 3D models as triangular meshes using photogrammetry, but can be directly adapted to other representations and is not limited insofar.

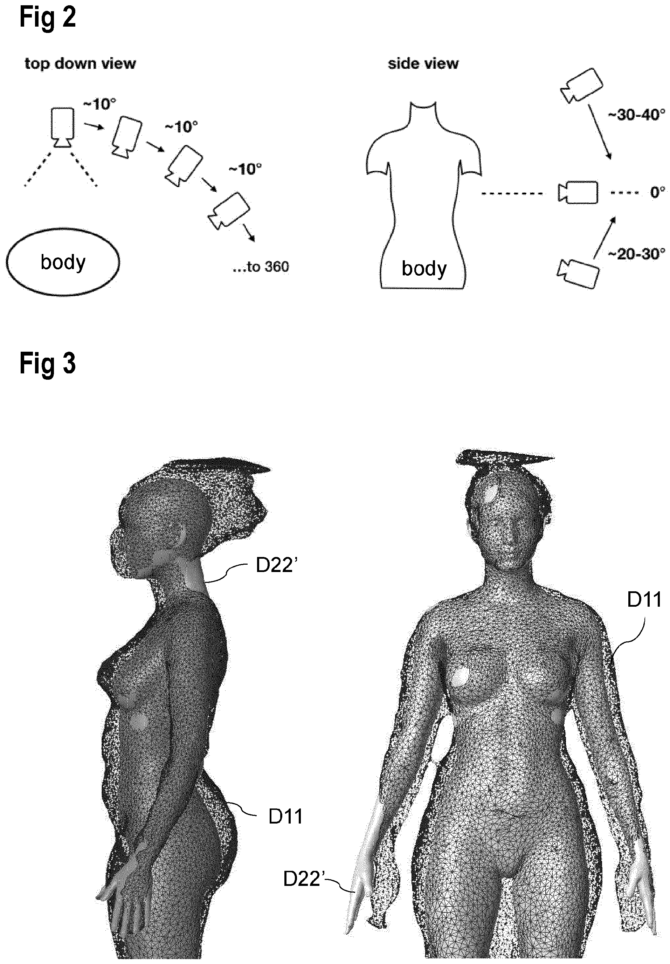

Figure 2 shows example implementations of such a creation process with a top-down view of the body on the left side and a side view of the body on the right side of Figure 2. The example differential angle of about 10° in the top-down view is only used as an example and could also be higher or lower depending on the complexity of the body or object. Similarly, also the viewing angles denoted on the right side for the side view of the body are only taken as examples. This for example can be implemented with a turntable, on which the body is placed for achieving the different viewing angles. Alternatively, the camera can be moved around the body.

A 3D reconstruction technique can be used to generate a polygonal 3D mesh of the body or object. The 3D reconstruction usually operates by image feature matching and needs to be able to correctly identify and distinguish image features in several images as well as possible. To enable this, the rendered images are preferably in a lossless image format like PNG, with a resolution that is a) high enough to reflect to all geometric and texture details that are present in the CAD model and b) high enough to avoid visible pixel borders and aliasing. At the same time, the resolution should not be higher to avoid unnecessary computational complexity. This for example can be achieved with a resolution of at least 6 megapixels.

Photo capturing can be achieved by a human operator or can be automated by a machine consisting of an electric turntable, one or more cameras, flashes and a control unit, e.g. a computer. Capturing may be performed with a standard DSLR camera or smartphone camera.

The 3D reconstruction is preferably fully automated. The input is one or more set of images and optional metadata. The output is a 3D mesh, consisting of geometric information like vertices, faces, normals etc., e.g. in the form of 3D surface points.

3D reconstruction can be based on conventional photogrammetry methods like (simultaneous) localization and mapping, SLAM, structure-from-motion, SFM or the like. These approaches find and identify common parts in the image set/sets by matching so-called image features. Image features are distinctive points or patches in an image, for example a specific color gradient or pattern. By matching these features and triangulating corresponding 3D points, a 3D surface hypothesis is reconstructed. It is possible to use optimization methods that enforce a certain smoothness of the surface to improve the result

Such a 3D body reconstruction can be enriched with data from machine learning algorithms. In particular, pre-trained machine learning algorithms can be used to detect special points on the body, e.g., the positions of joints or, say, the eyes. The output of such algorithms can either be 3D points or 2D points on single images, from which 3D points could be obtained. Such points are called *landmarks* D12 in the present disclosure.

Depending on the method one uses for obtaining the body reconstruction, one may not know its real-world scale. If this is the case, the scale can be estimated in later steps using, e.g., the body height provided as input by the user.

The improved measuring concept further relies on a template *parametric body model,* PBM, D21, which is a 3D computer model of a generic body, in particular a human body. Such body models are usually either hand-crafted or created from large data sets of 3D scans of actual humans. This model can be parameterized, i.e., its shape as well as its pose is given by a set of parameters. Such parameters may include the body height, the length of arms, the size of thighs, or the shoulder width for defining the shape, or the angle in which certain joints like elbows or knees etc. are bent, and in which direction the pose is defined. By setting these parameters, a human operator or a computer program can arbitrarily create many 3D models that resemble human bodies, not only in visual appearance but also in terms of proportions. In the present description, we consider the PBM to be represented as a 3D triangular mesh, preferably with an associated armature that represents the human skeleton, e.g. in a simplified way. Changing this armature alters the surface mesh accordingly, allowing movements of the human body to be simulated, e.g. the bending of an elbow. Hence the pose and/or shape of the body can be adjusted. Other implementations of PBMs that allow parametrizing at least with respect to shape and pose could also be used.

In contrast to e.g. the surface mesh of the 3D body reconstruction, the PBM template can carry rich semantic information. For example, while giving the tip of the elbow on a body reconstruction in an automated way is a task that would require sophisticated computer vision algorithms, the corresponding point on the PBM template is always given. In particular, it may be assumed that the structure of the mesh of the PBM template is invariant, and that only the positions of the mesh vertices (and data associated with them) change when adapting the PBM's parameters.

In order to create measurements on a PBM instance that relate to actual measurements done on a human body, the PBM must be manipulated to resemble the shape of the scanned human body, i.e., the body reconstruction. This process can be called *fitting* the PBM to the 3D body reconstruction. The input of the process is the body reconstruction and the PBM template. It will result in a PBM instance that resembles the 3D body reconstruction in shape and pose and, eventually, size.

Referring back to Figure 1, step S22 describes the fitting of the PBM to the body reconstruction. In other words, the parameters of the PBM template are fitted to the 3D reconstruction to generate a fitted PBM instance D22. For example, the PBM template D21 is fitted at least with respect to a body pose and a body shape and optionally to a bone length.

Figure 3 shows different views of an example of a 3D reconstruction D11 as a polygonal three-dimensional mesh or wireframe together with a PBM to be fitted. In the example of Figure 3, the PBM is shown in an intermediate stage D22' where the shape of the PBM is roughly fitted to the 3D reconstruction D11 but is still not perfectly aligned with the shape, as can be seen for example around the arms, the hips, the belly, the head etc. However, the pose is already matched.

The process of fitting may rely on estimating the position of body parts. For this task neural networks may be employed, which usually give the position of body parts, in particular joints, on 2D images of the human body.

For example, during the process of photogrammetry, the relative positions of cameras from which the individual photographs are taken are estimated. From these positions and the positions of the joints in the 2D images, an estimate of the joint positions can be obtained. Such a process is also known as triangulation. While there may be several approaches for performing the fitting of the PBM template to the body reconstruction in order to achieve the fitted PBM instance D22, in the following an example flow, respectively example implementation details, are given.

For example, it may be started with parameterizing the bone length. For the fitting, the size of the bones from the joint distances may be obtained. As described before, the PBM can be altered in shape. Such a shape change may be called a morph, and to the extent to which a morph is applied, is indicated by a morph factor. The morph factors may be selected such that the bone lengths of the fitted PBM instance approximately match those obtained for the body reconstruction D11. This may be done by various optimization software. The morphs may be designed in a way that applying them within certain bounds always leads to plausible representations of human bodies. As the joint positions detected, e.g. by the neural network, may not exactly match those modelled by the armature of the PBM, the relative positions of the joints may be altered by fixed, predefined computations. For example, the neck position is moved forward with respect to the position of the pelvis and the shoulders.

As mentioned before, the body reconstruction may not capture the absolute size of the human body, however this may be compensated by giving the length of a single joint or a sequence of joints, for example the body height, which can be easily measured reliably or is even known by users. In this process, symmetry constraints may be imposed, which require e.g. that the length of both arms does not vary too much.

After the bone length of the PBM is fixed, the joints of the PBM armature are rotated such that the joints are at the same positions as of the body reconstruction. The PBM may come with constraints on the joint angles such that all possible positions resemble those doable by humans. The process may be done incrementally. For example, the armature or skeleton is organized in a tree-like structure, where the position of certain joints, e.g. the left elbow, depends on the position of others, e.g. the left shoulder. Hence it may be started by placing the root of the structure at the right position and then incrementally rotating the dependent joints. This process may be performed by an optimization software. Eventually the pose of the PBM instance is fitted.

We call the combination of a PBM with values for all its parameters a *body model instance* or *PBM instance* D22. The body model may be considered standing upright on an idealized ground plane.

Generating the shape of the PBM such that it matches the body reconstruction is the most involved part of the fitting process. This process again relies on applying morphs to the PBM. In addition to estimating morph factors, the process may also fine-adjust the positions of joints. By this, the system changes the position of points V (e.g., vertices) on the PBM surface.

There are various ways of achieving this. Most of these ways boil down to devising a certain set of points on the PBM surface S and defining a part of the space in which these points are required to lie. For a point A we denote this region by R(A). These regions are obtained from the body reconstruction, usually from the reconstruction's surface T, and an optimizer attempts to fulfill most of these constraints (usually in a least-squares sense). That is, given a set of points V on the PBM surface (e.g., its vertices) the system minimizes the sum of the distances between A and R(A) for all points A in V. While for practical purposes the distance will usually be the squared Euclidean distance, the approach extends to other metrics.

    1. Point-point correspondences:
For a point A on the PBM surface we find a point B on the surface of the body reconstruction and require that A as close to B as possible, i.e., R(A) = {B}. Usually, A will be a vertex of the PBM mesh. The point B can be obtained from A in the following ways:

        a. Let N be the normal of the PBM surface S at A. Then B is defined as the intersection point of the line through A along N with the reconstruction surface T that is closest to A. If there is no such point, A is not considered part of V.
b. B is the point on T closest to A.

2. Point-plane correspondences:
As in the previous paragraph, we find, for a point A on S a point B on T. Let P be the plane tangent to T at B. We require that A is close to the plane P, i.e., R(A) = P.

3. Point-surface correspondences:
As before, we select a point B on T from a point A with surface normal N. We define R(A) to be the subset of T in a neighborhood of B, such that each point in R(A) has a surface normal N' on T whose angle with N is below a given threshold. Intuitively, the target area for A is a region on T that faces into a similar direction.

4. Point-projection correspondences:
Consider an image that is used for the photogrammetry process. As the process gives the estimated parameters of the camera for the image, this can be used to project a point A on the PBM surface onto the image, obtaining a point A'. We obtain a point B' on the image. B' can be selected as, e.g., the point on the outline of the silhouette of the human body that was photographed, or the point of the silhouette that is hit by the projection of the normal N at A on the image. That is, R(A) is the ray consisting of points that project to B'.

In the above description, we may also change the role of the PBM surface and the body reconstruction surface, and require the optimizer to minimize the distance between points on the reconstruction to regions defined by the PBM surface. This is in particular useful if the reconstruction is only represented as a point cloud (and not a surface mesh).

The approach for determining the body shape can usually be improved by applying some of the following filter steps which decide which points on the PBM surface S are in the set V, i.e., which points are taken into account for the optimization process. We may decide to remove a point A from V if it has one of the following properties.

- The distance between A and the point B on the reconstruction surface is above a given threshold.
- The angle between the surface normal N on S at A and the surface normal N' on T at B is above a given threshold. Note that this also covers cases in which the outside of S faces the inside of T; such situations may appear with self-overlapping surface parts at, e.g., the arm pits.
- The number of other points in V close to A is above a given threshold.
- A is a point whose curvature w.r.t. S is above or below a given threshold (i.e., the system may decide to use points with high curvature, or use points with low curvature).
- There exists an image of the scanned human body such that A is on the outline of the projection of the PBM onto the image.

The quality of the output can be improved by repeating the steps of correspondence search and optimization; in this way, new, potentially better correspondences are obtained after a previous optimization step, which further improves the quality. Also, restricting the points in V to belong only to a certain body part and to use points from other body parts in subsequent iterations can improve the quality.

It should be noted that also the pose may be adapted slightly in each iteration to better match the body shape, slightly diverging from the detected landmarks.

This part of the process can be adapted by using further methods of correspondence search.

Referring back to Figure 1, the improved measuring concept allows for defining body measurements on a single generic body model, i.e. the template PBM D21. Such a measurement definition D31 on the PBM template D21 may include or define one or more measurement instructions that are each associated with at least one measurement point defined with respect to the PBM template D21. In this respect it may be distinguished between measuring distance, surface area and volume parts of the body. Furthermore, dependent measurements can be obtained from these measurements, e.g. a volume measurement can be used to estimate the weight of a body part.

The respective measurement instructions may be given by a definition of segments S31 and/or a definition of non-segment measurements S31'.

With the measurement definition D31, the respective measurements or measurement instructions can be mapped to the PBM instance in step S32, which results in corresponding measurement definitions on the PBM instance D32. From the PBM instance the measurement definition can also be transferred to the corresponding body reconstruction D11 in a corresponding mapping step S33. This may result in the measurement definition on the body reconstruction D33. In this way the improved measuring concept can measure predefined measurements on an arbitrary number of body reconstructions, respectively PBM instances, such that measurement values are obtained and resemble those of the human bodies represented by the PBM instances. These measurements may be used in processes that rely on them, e.g. in dressmaking.

In the following, the basis of the measurement definition D31 will be explained in more detail with respect to possible definitions and measurement instructions.

## Length and Circumference Measurements

Length and circumference measurements are classic measurements in dressmaking. It comprises measurements like the arm length or the waist circumference. Usually, such measurements are taken using a measurement tape. According to the improved measuring concept, the measurement may be done along 1-dimensional paths that resemble the position of the measurement tape. Length measurements usually have two fixed endpoints. Circumference measurements may also be defined by points on or close to their path. In the following, 1-dimensional measurements are described as combinations of segments.

## Definition of Segments

Length measurements can be defined as combinations of *segments.* A segment is a 1-dimensional path between two points defined on the PBM instance D22. Such measurement points may be defined on the body model surface, but also on the ground or on a landmark of the 3D body reconstruction. If the endpoints are on the body model, they can either be on fixed points, e.g. vertices of the body model or points on a mesh triangle given by barycentric coordinates, or they can be defined on the actual PBM instances. The term *barycentric coordinates* is used to denote that a point is given in relation to other points, e.g., of a triangle. For example, given a point P on a triangle with corners A, B, and C, there exist three scalars r, s, t such that

$$P = r * A + s * B + t * C.$$

The scalars r, s and t can be considered as the barycentric coordinates of P with respect to the triangle. For example, an operator preparing the measurement definition can define that the actual starting point is the point that is obtained in the vicinity of the initial point optimizing a certain criterion, e.g. a point with locally maximum curvature.

For example, for a point *A* defined by an operator on the PBM template D21, we denote by *A'* the corresponding point on the PBM instance D22, that e.g. is either on the same vertex or on the same triangle with the same barycentric coordinates, and by *A''* the point where the actual measurement starts. If not stated otherwise, we have *A' = A''*. However, for features like creases around breasts, shoulder tip, apexes, nose tip etc., the point *A''* can be defined by locally optimizing a function on the surface, starting from the point *A'*. Also, the point A'' can be defined to lie on another measurement segment; for a measurement segment S we can define a dependent measurement segment T such that the starting point A'' of T has to lie on S in the vicinity of a given point A'.

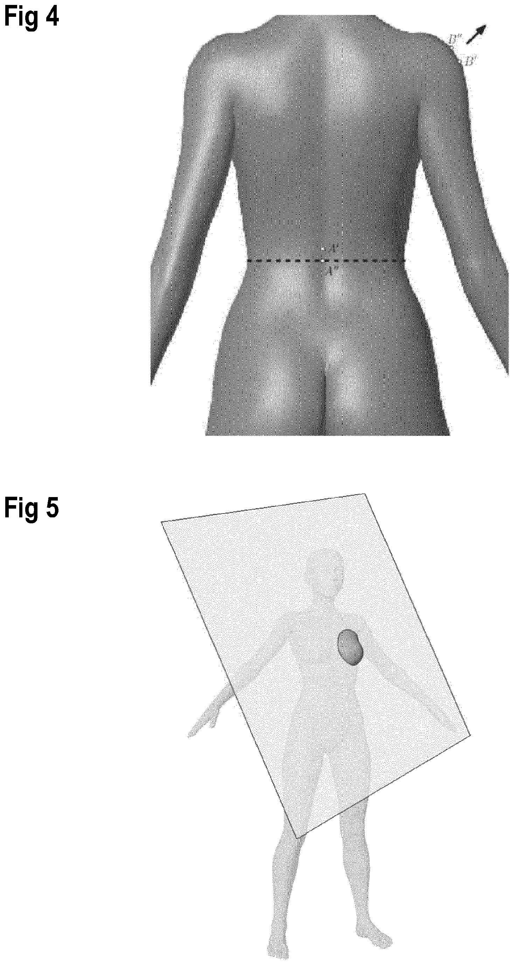

Referring to the example of Figure 4, a point A'' may be defined as the point closest to A' on the waist circumference measurement (dashed line), and a point B'' may be defined as the point obtained from B' by locally moving it towards the direction indicated by the arrow.

If measurements are not done on the PBM but on the body reconstruction D11, their endpoints may also be defined on the landmarks D12 that were obtained from a human operator or computer vision algorithms; such landmarks comprise, e.g., breast apices.

Given the two endpoints *A* and *B* as measurement points, the path *P* between them can be defined that gives the segment of a measurement in various ways:

> 1. Pis the line segment in space between A and B.
> 2. If A and B are on the surface of the PBM, P is defined as either of the following:
>
> > a. P is the shortest path on the surface of the PBM.
> > b. P is the path defined by the intersection of the surface of the PBM and a plane that contains A and B. Such a plane can be described in various ways:
> >
> > > i. The plane passes through a given point C, defined on the surface of the PBM (and thus depending on the instance) or by absolute coordinates in space.
> > > ii. The plane is parallel to a given direction vector of the PBM (e.g., the weighted average of the normal vectors of the surface at A and B) or an absolute vector (i.e., pointing in horizontal direction to make the plane as vertical as possible).
> >
> > Note that the intersection of the plane with the surface will in general be a set of cycles. P can be defined to lie on the cycle that also contains A and B. To define which of the two parts of the cycle defined by A and B is P, a direction of the plane can be defined. Degenerate cases (e.g., triangles of the mesh intersecting the defining plane) may be handled with standard methods like "simulation of simplicity".
> > c. P is the shortest path on a locally 1-dimensional subset of the surface. Such a locally 1-dimensional subset can be defined by the edges of the mesh, or by edges of the mesh at which the angle between the adjacent faces is above a given threshold.
>
> 3. P is the shortest path in 3-dimensional space between A and B that does not intersect the interior of the model.

In general, a measurement instruction relating to one or more segments may be given as a definition of one or more segments between respective measurement points that are defined with respect to the PBM template D21, wherein mapping said measurement instruction to the PBM instance includes mapping of said respective measurement points to the PBM instance D22.

The PBM can come with a semantic labeling that declares certain regions of the surface to belong to certain body parts. The definition of the path in 2.a and 2.b above can be augmented by the requirement that the path stays within a predefined set of regions.

Based on these definitions of segments, other families of segments can be defined by locally altering the path P. For example, the path described in 2.b is a chain of line segments, whose endpoints can be moved to locally optimize certain criteria defined on the surface, e.g., maximizing the curvature.

Another example is motivated by measurement descriptions in dressmaking, which often require the measurement tape to be stretched tight. This behavior can be approximated by *convexifying* the path P. The cycle described in 2.b can be replaced by the boundary of its convex hull on the defining plane. Even if the points defining the cycle are not precisely on the same plane, the convex hull of the projections of the vertices of the path on a plane can be computed, e.g., a plane whose normal is the average of all defining planes. The edges of the resulting convex hull may then define the edges of the path.

Circumference measurements can be defined as a cycle of segments (S31), but they can also be defined without segments (S31'). For example, the waist circumference can be defined as the locally shortest intersection of the torso surface with a horizontal plane in the neighborhood of the navel. We can thus define a measurement by defining an initial plane (in the example, the horizontal plane through the navel) and searching a local minimum in the length of the intersection with the PBM mesh using an optimization method, e.g., gradient descent.

Similar to paths of a segment, the whole cycle defining a circumference measurement can be altered locally to define new families of measurements. The cycle can be convexified, or can be tightened to locally minimize its length, either in space and avoiding the PBMs interior, or on the PBM surface. Note that such measurements do not have to lie on a plane.

In general, a measurement instruction relating to a cycle may be given as a definition of a cycle based on an intersection between a surface of the PBM template D21 and a plane defined in relation to an anchor measurement point that is defined with respect to the PBM template D21, wherein mapping said measurement instruction to the PBM instance D22 includes mapping of said anchor measurement point to the PBM instance D22.

Finally, we note that, for some measurements in dressmaking, segment endpoints are defined via paths of other segments. For example, the measurement tape indicating the waist circumference is fixed, and the back length is measured as the shortest distance between a point on the neck and the closest point on the waist circumference. Our method allows for defining measurements analogously: given a path or cycle X, a segment endpoint A" can be defined as the point on X closest to a given point A. For the example of the back length, the operator can define a point A on the spine, and the closest point A" will similarly be on the spine, but also on the cycle defining the waist circumference. This point A" can then be used for a length measurement between A" and a point B on the neck.

In addition to automatically placing the measurement segments, the segments can also be defined by human operators in an interactive way; e.g., by defining vertices of the measurement path.

Accordingly, a measurement instruction may also define a segment or any other measurement with one or more measurement points that are defined with respect to a path as defined in another measurement instruction defining a segment or a cycle.

Surface Area measurements

Defining surface area measurements is analogous to defining circumferences. The cycle on the mesh surface that defines a circumference separates the surface into two parts. The area of one such part can be measured.

Volume Measurements

Volume measurements will usually be defined on a part of the body. In the computer representation, such a part is defined by parts of the surface of the model and an additional two-dimensional boundary. The (1-dimensional) intersection of this boundary with the surface of the model then defines a volume that can be measured. We can thus define a volume measurement by a surface or by a cycle. Several ways are possible, some of which are described in the following.

1. The most straightforward way of a definition is to intersect the model with a plane, so that the plane "cuts away" the part of the body representation (PBM or body reconstruction). As this definition is ambiguous (the plane can intersect the representation in multiple parts), an operator has to define the relevant part, e.g., by picking a point on its surface. An example of a representation of such intersection is shown in Figure 5.

2. A more indirect way of defining a volume is by defining a cycle on the surface of the representation, e.g., as defined for circumference measurements, see above. If this cycle lies on a plane, the definition is equivalent to the previous one. However, if this is not the case, e.g., when the cycle is defined as a locally shortest cycle or by a sequence of several non-coplanar segments, we need to define a canonical way of closing the surface, i.e., making it watertight, such that a volume is defined.

Various state-of-the-art algorithms exist for making a mesh watertight. Usually, such algorithms will triangulate the part defined by the cycle. For consistent measurements, it is desirable that this process results in a similar measurement for geometrically similar body parts. For example, subdividing the cycle by further vertices should not alter the measurement too much. One option is to choose a triangulation that maximizes the volume below the added triangles.

3. Another variant of defining the volume measurement would be to consider the surface part as a container, and compute the largest amount of liquid it can hold when being in the right position. Algorithmically, this amounts to finding a plane that separates the space such that the defining cycle is in one half-space and the volume defined by the plane and the surface in the other half-space is maximal. If the surface is represented as a triangular mesh, such a plane can be computed by a computer in the following way: there is only a finite number of ways to separate the vertices by a plane. Further, the volume is only maximized if such a plane touches a vertex of the mesh. The position of a plane through a point can be described using two parameters, and thus the volume defined by a plane through a vertex is a partially-defined function with two parameters, given by the sum of cubic terms. The maximum of such a function can be found analytically, and the global volume is the maximum over all these maxima for each vertex and family of separating planes. This description works in the same way for visual hulls and voxel grids, as their surface can be transformed into a triangular mesh.

In general, a measurement instruction relating to a volume may be given as a definition of a volume limited by a defined part of a surface of the PBM template D21 and a two-dimensional boundary intersecting with the surface, the boundary being defined in relation to an anchor measurement point that is defined with respect to the PBM template D21, wherein mapping said at least one measurement instruction to the PBM instance D22 includes mapping of said anchor measurement point to the PBM instance D22.

Other measurements may be derived from existing ones. For example, the measured volume of breasts can be used to determine a cup size for a bra.

A major application of body measurements is dressmaking. There are different measurement systems that define which parts of the body have to be measured in which way, which is then transformed into sewing patterns. Examples of such measurements that illustrate the different technical requirements on the system are given in the following.

Body height is a common base measurement. Most people know their body height and how to measure it. As models derived from photogrammetry usually do not come in a predefined scale, the improved measuring concept may use the body height as input to put all other measurements in the correct scale.

Waist circumference can be measured with the measuring tape on a horizontal plane (i.e., parallel to the ground), along the maximal cavity of the waist.

According to various measurement systems, the lower waist circumference is given by having the measuring tape on a horizontal plane, a defined distance below the waist measurement.

The hip circumference can be measured again in horizontal position, along the outermost part of the buttocks.

The full bust circumference can be measured with the measuring tape placed roughly horizontally, passing over the outermost parts of the breasts; on the back the tape has to cover the lower part of the shoulder blades and will thus go up slightly.

The lower bust circumference can be measured with the tape horizontally directly below the breasts.

The arm length can be measured from the sleeve crown to the carpus via the outermost part of the elbow.

According to the improved measuring concept such measurements are modelled with various measurement instructions forming the measurement definition D31. Such modelling only needs to be performed once and is available for arbitrary 3D reconstructions respectively PBM instances.

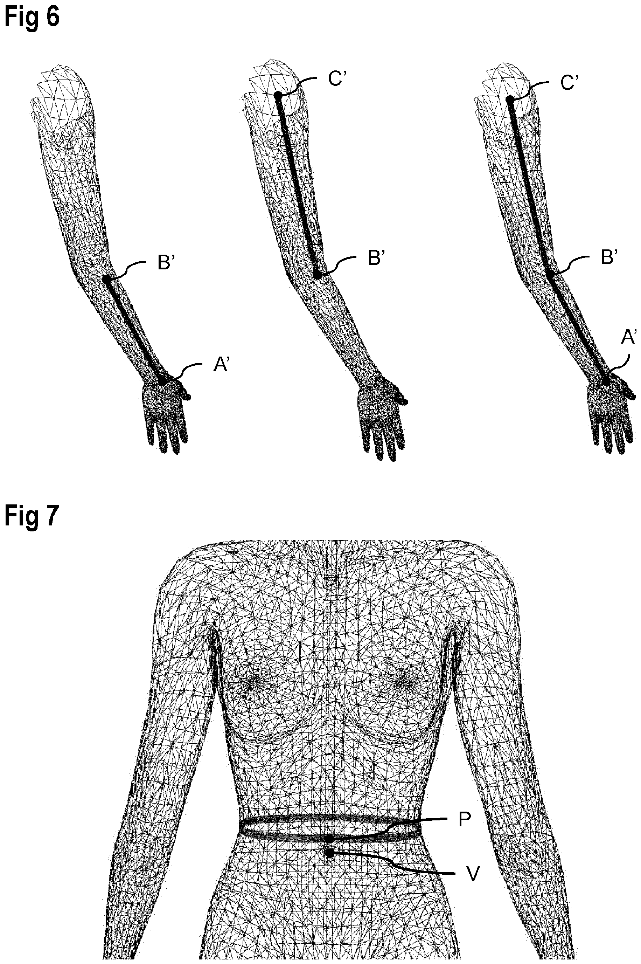

For example, referring now to Figure 6, a simple combined measurement is the arm length. It consists of two segments from A' to B' on the lower arm and from B' to C' on the upper arm. The segment may be defined as the intersection path between the PBM and the plane parallel to the vertex normals at A' and B', and B' and C', respectively.

Referring now to Figure 7, in an example for measuring the waist circumference, the operator defines a vertex V of the PBM in the vicinity of the maximal cavity of the waist (e.g., a vertex at the navel). As outlined above, the operator may define the horizontal plane through V and that the measurement is a circumference measurement through a plane P' that is locally minimal at P (i.e., P is shifted vertically until the length of the intersection of the torso with the plane no longer decreases). This local minimum may be found by an optimization algorithm.

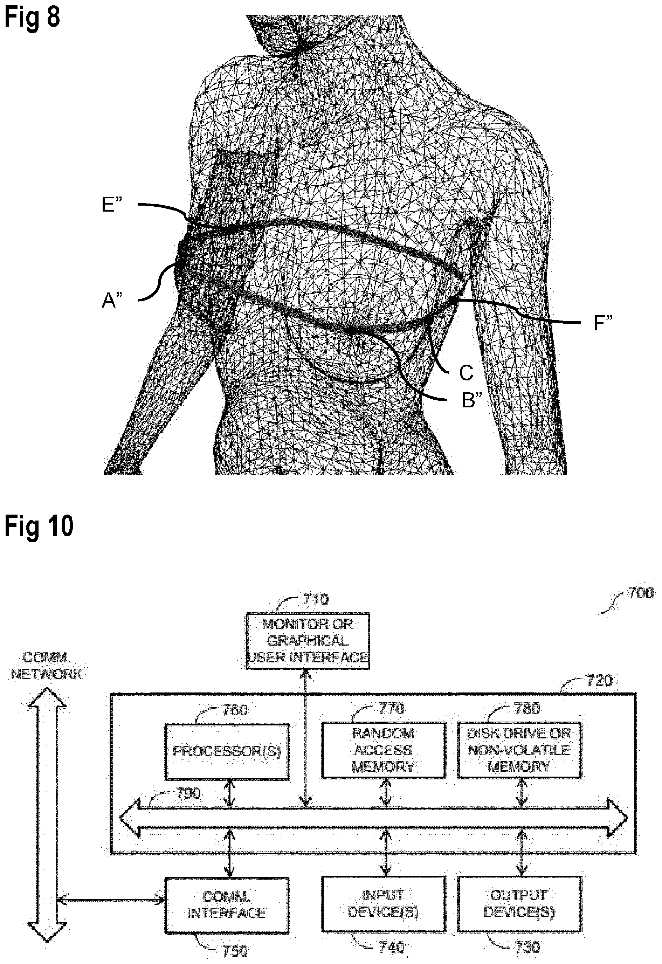

Referring now to Figure 8, in an example for measuring the full bust measurement, we first define an auxiliary circumference measurement that passes through the points A and B that model the outermost parts of the breasts. These points may either be defined directly, or the operator chooses points A and B close to them and defines that the actual defining points A" and B" are locally furthest in the front direction of the PBM. We define a plane P that passes through A" and B" and that is parallel to the front direction of the PBM; thus, if the points A" and B" have the same distance to the ground, the plane is horizontal.

Let C be the cycle defining the circumference on this plane. The operator may define two points E and F below the armpits, and defines E" and F" as the closest points on C to E and F, respectively. We define a measurement M as the union of (i) the segment between F" and E" and the intersection of the PBM with P to the front, and (ii) the segment between E" and F" and the intersection of the PBM with a plane Q that passes through a point G on the lower parts of a shoulder blade of the PBM. The final measurement M' is then defined by projecting the vertices V of M on a horizontal plane, take their convex hull, and project the edges of the convex hull back such that they define a cycle on a subset of V in 3D.

Referring back to Figure 1, according to the improved measuring concept there is given a 3D body reconstruction D11 and an instance D22 of the PBM fitted to this reconstruction as described above. Further, the definitions D31 of various measurements on a reference PBM are given. As described above, these measurements are described in terms of (i) segments S31 or (ii) further circumference descriptions S31'. In the following, we describe the process S32 of mapping the definitions to the PBM instance with an example on segments, and later state how the process can be adapted for other descriptions.

After and/or with mapping the measurement definition, the actual measurements as defined by the respective measurement instructions can be performed.

The result of this stage of the process is a set of measurements related to the scanned human body, i.e., the measurement values (e.g., in cm, $cm^2$, or liters), optionally accompanied with the visualization of the paths that lead to the measurement. We may also output the actual paths in a computer-readable format for further processing. This may be encompassed by step S40 of Figure 1.

The measurements given by the system may be categorized into three different types:

- Measurements done on the fitted PBM instance
- Measurements done directly on the 3D body reconstruction
- Measurements computed from other measurement values

While it may seem reasonable to do all measurements on the body reconstruction (as it is the data derived more directly from the human body), the body reconstruction data can be noisy or not well-structured (e.g., self-overlapping), or not in a suitable format (e.g., a point cloud).

We first describe how measurements defined on a PBM template can be transferred to PBM instances, and then how they are transferred to measurements on the body reconstruction.

Transfer measurement definition to the fitted PBM instance

In the description above different ways of defining segments of measurements have been disclosed, allowing basically two ways of mapping. These are described in conjunction with Figure 9: (1) we transfer each segment of the path to the PBM instance, i.e. barycentric vertex mapping, or (2) we transfer only the endpoints A and B to endpoints A' and B' on the fitted PBM instance and, optionally, determine the actual endpoints A" and B", and compute the segment by the method defined for the measurement, e.g. shortest path on the surface, intersection by a plane etc.

1. For each vertex of a segment on the PBM template, we can obtain its barycentric coordinates. For each triangle with corners R, S, and T, applying the pose changes and morphs results in a triangle with corners R', S' and T' on the surface of the fitted PBM instance. For a point P on the template PBM for which we have P = r*R + s*S + t* T, we obtain a point P' = r*R' + s*S' + t*T' (i.e., using barycentric coordinates). When doing this for each vertex of the path on the PBM template, we obtain a similar path on the fitted PBM instance.

2. For the second variant, we can obtain the segment endpoints A' and B' using their barycentric coordinates as before. Then, however, the path between these points is computed using the fitted PBM instance, in the different variants described above, e.g. as line segment, shortest path in 3D or path on the PBM surface. For example, if the segment is defined as the shortest path on the PBM surface between points A and B, the improved measuring concept may compute the shortest path on the fitted PBM instance between the points A' and B'. Likewise, if the segment is described by the intersection between the PBM and a plane defined by points A, B and C, the segment on the fitted PBM is defined by the path between A' and B' on the plane defined by A', B', and C'. As a further alternative, a shortest path on edges or other 1-dimensional subsets may be calculated.

As described above, the segments defined in the latter way can be restricted by semantic information provided by the PBM; for example, a shortest path between two points on the PBM surface can be constrained to remain in the same body part (as provided by the semantic information).

For both variants, we have the option of bringing the fitted PBM into a predefined pose to do the measurement there (as, e.g., the arm length may depend on the angle of the elbow). This may give more realistic results, in particular if the scanned person is not in the required pose for measuring. For example, some measurements also require the person to be sitting.

For circumference measurements that are defined without explicitly defining segments, the measurement can be transferred analogously. For example, when defining the waist circumference as the locally shortest intersection of the body surface with a horizontal plane, the point P defining the plane initially (e.g., a vertex at the navel) has a corresponding point P' on the fitted PBM, and the horizontal plane through this point can be used as the starting configuration for the optimization process resulting in the final measurement.

Transfer measurement definition to 3D reconstruction

We can also transfer measurement segments to the surface of the body reconstruction (in case it was created during the reconstruction process). This can be similar to the process of fitting the PBM template to the 3D reconstruction described above, in which we described finding correspondences between points on the surface of the fitted PBM instance and points on the surface of the body reconstruction, i.e., for a point A on the PBM we obtain a point A* on the reconstruction mesh.

Analogously to the description of Figure 9 above, we have the options of (1) taking a segment on the fitted PBM and defining a segment on the reconstruction mesh by mapping the path (A, B, C, ...) to the path (A*, B*, C*, ...), or (2) mapping only the endpoints of the segment to the body reconstruction and obtaining the path by the method defined in the measurement instruction. For the second option, the paths may also be restricted to by semantic information. We may, e.g., use semantic segmentation on the input images or the texture provided by external tools and project them on the surface of the body reconstruction to guide the measurement segment.

In addition to finding a corresponding point A* to a point A on the fitted PBM instance with the methods mentioned above, the point A* may also be constrained to lie on a plane defining the measurement segment on the fitted PBM. A* is then the closest point to A that lies on the plane, or the closest point to A that lies on the line through A and the projection of the surface normal at A on that plane.

In case the 3D body reconstruction is supplied as a point cloud but not as a surface mesh, some measurements can still be transferred to the reconstruction. For example, when a segment is defined by a plane P, we can pick the points of the point cloud that are within a certain distance to the plane. We can then take the 3D convex hull of these points and use it instead of the surface of the 3D body reconstruction in the preceding paragraph. Alternatively, we may project these points onto the plane P, and treat the 2D convex hull of these points as the intersection of the surface of the body reconstruction and the plane defining the measurement segment.

We may also use measurement instructions to derive measurements that we do not measure directly. Example use case: the reconstruction may have bad quality on some body parts. If the resulting measurements are put in a relationship, e.g. based on statistics or trained neural networks, then outliers can be identified and the measurement can even be replaced with the expected one, e.g. based on the others that are considered valid.

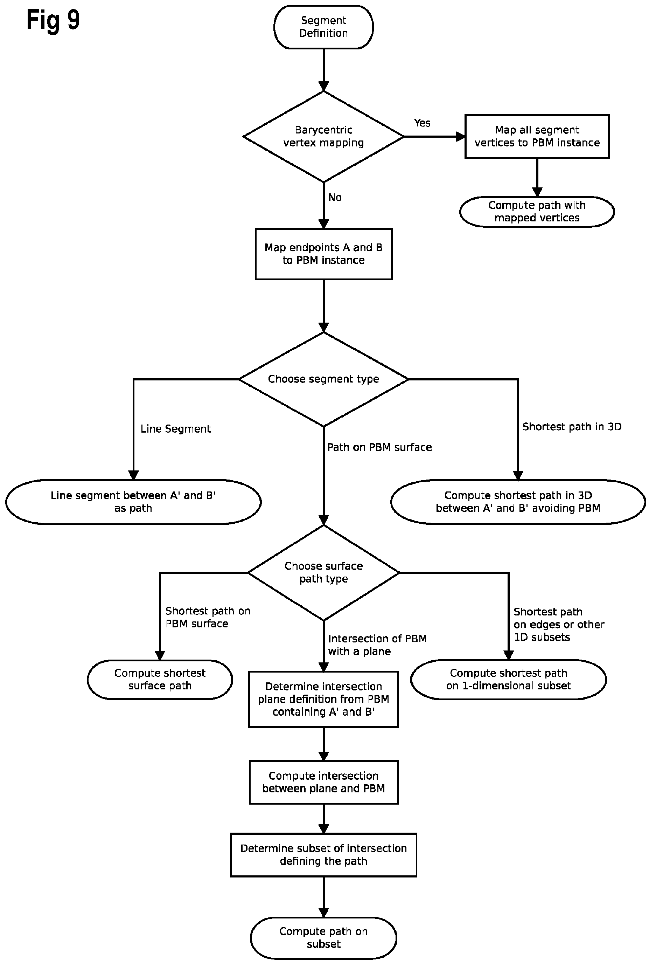

Figure 10 is a block diagram of a computer system that may incorporate embodiments according to the improved measuring concept. Figure 10 is merely illustrative of an embodiment incorporating the improved measuring concept and does not limit the scope of the invention as recited in the claims. One of ordinary skill in the art would recognize other variations, modifications, and alternatives.

In one embodiment, computer system 700 typically includes a monitor 710, a computer 720, user output devices 730, user input devices 740, communications interface 750, and the like.

As shown in Figure 10, computer 720 may include a processor(s) 760 that communicates with a number of peripheral devices via a bus subsystem 790. These peripheral devices may include user output devices 730, user input devices 740, communications interface 750, and a storage subsystem, such as random access memory (RAM) 770 and disk drive 780.

User input devices 740 include all possible types of devices and mechanisms for inputting information to computer system 720. These may include a keyboard, a keypad, a touch screen incorporated into the display, audio input devices such as voice recognition systems, microphones, and other types of input devices. In various embodiments, user input devices 740 are typically embodied as a computer mouse, a trackball, a track pad, a joystick, wireless remote, drawing tablet, voice command system, eye tracking system, and the like. User input devices 740 typically allow a user to select objects, icons, text and the like that appear on the monitor 710 via a command such as a click of a button or the like. User input devices 740 may also include color and/or depth cameras, body shape and/or pose tracking sensors, hand tracking devices, head tracking devices or the like. User input devices 740 may particularly include various types of cameras, e.g. a DSLR camera or a camera of a smartphone or the like. Such a camera or smartphone or other mobile device may be connected to computer 720 over a communication network connected via communications interfaces 750.

User output devices 730 include all possible types of devices and mechanisms for outputting information from computer 720. These may include a display (e.g., monitor 710), non-visual displays such as audio output devices, etc.

Communications interface 750 provides an interface to other communication networks and devices. Communications interface 750 may serve as an interface for receiving data from and transmitting data to other systems. Embodiments of communications interface 750 typically include an Ethernet card, a modem (telephone, satellite, cable, ISDN), (asynchronous) digital subscriber line (DSL) unit, FireWire interface, USB interface, wireless connections like Wi-Fi and Bluetooth, and the like. For example, communications interface 750 may be coupled to a computer network, to a FireWire bus, or the like. In other embodiments, communications interfaces 750 may be physically integrated on the motherboard of computer 720, and may be a software program, such as soft DSL, or the like.

In various embodiments, computer system 700 may also include software that enables communications over a network such as the HTTP, TCP/IP, RTP/RTSP protocols, and the like.

RAM 770 and disk drive 780 are examples of tangible media configured to store data, including executable computer code, human readable code, or the like. Other types of tangible media include solid state drives, SSD, floppy disks, removable hard disks, optical storage media such as CD-ROMS, DVDs and bar codes, semiconductor memories such as flash memories, read-only-memories (ROMS), battery-backed volatile memories, networked storage devices, and the like. RAM 770 and disk drive 780 may be configured to store the basic programming and data constructs that provide the functionality of the improved modelling concept.

Software code modules and instructions that provide the functionality of the improved measuring concept may be stored in RAM 770 and disk drive 780. These software modules may be executed by processor(s) 760. RAM 770 and disk drive 780 may also provide a repository for storing data used in accordance with the present invention.

RAM 770 and disk drive 780 may include a number of memories including a main random access memory (RAM) for storage of instructions and data during program execution and a read only memory (ROM) in which fixed instructions are stored. RAM 770 and disk drive 780 may include a file storage subsystem providing persistent (non-volatile) storage for program and data files. RAM 770 and disk drive 780 may also include removable storage systems, such as removable flash memory.

Bus subsystem 790 provides a mechanism for letting the various components and subsystems of computer 720 communicate with each other as intended. Although bus subsystem 790 is shown schematically as a single bus, alternative embodiments of the bus subsystem may utilize multiple busses.

Figure 10 is representative of a computer system capable of embodying the improved measuring concept. It will be readily apparent to one of ordinary skill in the art that many other hardware and software configurations are suitable for such use. For example, the computer may be a mobile device, in particular a mobile phone, or desktop, portable, rack-mounted or tablet configuration. Additionally, the computer may be a series of networked computers.

Various embodiments of the improved measuring concept can be implemented in the form of logic in software or hardware or a combination of both. The logic may be stored in a computer readable or machine-readable storage medium as a set of instructions adapted to direct a processor of a computer system to perform a set of steps disclosed in embodiments of the improved measuring concept. The logic may form part of a computer program product adapted to direct an information-processing device to automatically perform a set of steps disclosed in embodiments of the improved measuring concept.

The specification and drawings are, accordingly, to be regarded in an illustrative rather than a restrictive sense. However, it will be evident that various modifications and changes may be made thereunto without departing from the scope of the invention as set forth in the claims.

**Claims**

1. A method for performing at least one measurement on a 3D reconstruction of a body using a computer system, wherein

   - the computer system has access to a parametric body model, PBM, template and to a measurement definition;
   - the PBM template comprises a 3D representation of a surface of a template body and is adapted to be parametrized at least with respect to shape and pose;
   - the measurement definition defines one or more measurement instructions that are each associated with at least one measurement point defined with respect to the PBM template;

   the method comprising:

   - receiving the 3D reconstruction;
   - generating a PBM instance by fitting the PBM template to the 3D reconstruction at least with respect to a body pose and a body shape;
   - mapping the one or more measurement instructions to the PBM instance; and
   - performing a measurement according to at least one of the one or more mapped measurement instructions;

   wherein at least one measurement instruction of the one or more measurement instructions is given as one of the following:

- a definition of one or more segments between respective measurement points that are defined with respect to the PBM template, wherein mapping said at least one measurement instruction to the PBM instance includes mapping of said respective measurement points to the PBM instance;

- a definition of a cycle based on an intersection between a surface of the PBM template and a plane defined in relation to an anchor measurement point that is defined with respect to the PBM template, wherein mapping said at least one measurement instruction to the PBM instance includes mapping of said anchor measurement point to the PBM instance;

- a definition of a volume limited by a defined part of a surface of the PBM template and a two-dimensional boundary intersecting with the surface, the boundary being defined in relation to an anchor measurement point that is defined with respect to the PBM template, wherein mapping said at least one measurement instruction to the PBM instance includes mapping of said anchor measurement point to the PBM instance.

2. The method according to claim 1, wherein

- at least one measurement instruction of the one or more measurement instructions is given as the definition of one or more segments between respective measurement points that are defined with respect to the PBM template; and
- mapping the one or more measurement instructions to the PBM instance comprises at least one of:
- mapping a path, in particular a complete path, of at least one of the one or more segments as defined with respect to the PBM template to the PBM instance;
- mapping said respective measurement points to the PBM instance and computing a path of at least one of the one or more segments, which are defined between the respective measurement points, using the PBM instance and the respective mapped measurement points.

3. The method according to claim 1 or 2, wherein

- at least one measurement instruction of the one or more measurement instructions is given as the definition of a volume limited by a defined part of the surface of the template body and a two-dimensional boundary intersecting with the surface, the boundary being defined in relation to an anchor measurement point that is defined with respect to the PBM template, wherein said anchor measurement point is mapped to the PBM instance; and

- the two-dimensional boundary intersecting with the surface is defined as one of the following:
- an intersection of a plane with the surface, the plane being associated with the anchor measurement point;
- a cycle on the surface and an auxiliary surface limited by the cycle, the cycle being defined in the at least one measurement instruction.

4. The method according to one of claims 1 to 3, wherein at least one measurement instruction of the one or more measurement instructions comprises pose information, the method further comprising, before performing the measurement according to the at least one mapped measurement instruction comprising pose information, adjusting a pose of the PBM instance based on the pose information.

5. The method according to one of claims 1 to 4, wherein at least one measurement instruction of the one or more measurement instructions is based on semantic information of the template body, in particular an association of the at least one associated measurement point to a region defined by the semantic information.

6. The method according to one of claims 1 to 5, wherein at least one measurement instruction of the one or more measurement instructions defines one of the following:

- a length measurement;
- a circumference measurement;
- a surface area measurement;
- a volume measurement.

7. The method according to one of claims 1 to 6, wherein
the 3D reconstruction comprises a plurality of landmarks and generating the PBM instance is based on the plurality of landmarks.

8. The method according to claim 7, further comprising detecting the plurality of landmarks based on data of the 3D reconstruction using a machine learning process.

9. The method according to claim 7 or 8, wherein mapping of associated measurement point to the PBM instance is based on semantic information of the template body and on at least one of the plurality of landmarks.

10. The method according to one of claims 1 to 9, further comprising:

- mapping at least one of the one or more measurement instructions to the body reconstruction including mapping of the at least one associated measurement point, in particular to a surface of the body reconstruction; and
- performing a measurement according to the at least one measurement instruction mapped to the body reconstruction.

11. The method according to one of claims 1 to 10, wherein receiving the body reconstruction comprises receiving a reference measure of the body reconstruction.

12. The method according to one of claims 1 to 11, wherein the measurement definition defines two or more measurement instructions, the method further comprising:

    - mapping the two or more measurement instructions to the PBM instance and/or to the body reconstruction;
    - performing measurements according to the two or more mapped measurement instructions; and
    - generating a validity measure of the measurements by relating the measurements, in particular based on a statistic method and/or an artificial neural network evaluation.

13. The method according to one of claims 1 to 12, wherein the representation of the surface is implemented with a 3D mesh and associated vertices, and wherein fitting the PBM template to the 3D reconstruction includes changing positions of the vertices, in particular without changing the structure of the mesh.

14. The method according to one of claims 1 to 13, wherein at least one measurement instruction of the one or more measurement instructions is associated with the PBM template and with a 3D representation of a garment or at least a portion of the 3D representation of the garment, and wherein a result of the measurement performed according to said at least one measurement instruction is adapted to be used during production of a piece of the garment.

15. A computer program product for performing at least one measurement on a 3D reconstruction of a body, the computer program product comprising a non-transitory computer readable storage medium and computer program instructions stored therein enabling a computer system to execute a method according to one of the preceding claims.

# Fig 1

# Fig 2

top down view

side view

# Fig 3

**Fig 4**

**Fig 5**

**Fig 6**

**Fig 7**

# Fig 8

E"

A"

F"

C

B"

# Fig 10

COMM.
NETWORK

710
MONITOR OR
GRAPHICAL
USER INTERFACE

700

720

760
PROCESSOR(S)

770
RANDOM
ACCESS
MEMORY

780
DISK DRIVE OR
NON-VOLATILE
MEMORY

790

COMM.
INTERFACE
750

INPUT
DEVICE(S)
740

OUTPUT
DEVICE(S)
730

# Fig 9

```
                         ┌──────────────┐
                         │   Segment    │
                         │  Definition  │
                         └──────┬───────┘
                                │
                                ▼
                          ◇─────────────◇        Yes    ┌─────────────────────┐
                         ╱   Barycentric  ╲─────────────▶│  Map all segment    │
                         ╲ vertex mapping ╱              │ vertices to PBM     │
                          ◇─────┬────────◇               │     instance        │
                                │                        └──────────┬──────────┘
                                │ No                                │
                                ▼                                   ▼
                       ┌──────────────────┐              ╭─────────────────────╮
                       │ Map endpoints A  │              │  Compute path with  │
                       │   and B to PBM   │              │   mapped vertices   │
                       │    instance      │              ╰─────────────────────╯
                       └────────┬─────────┘
                                │
                                ▼
                          ◇─────────────◇
                 ┌───────╱ Choose segment ╲───────┐
    Line Segment │       ╲     type       ╱       │ Shortest path in 3D
                 │        ◇─────┬────────◇         │
                 │              │                  │
                 ▼   Path on PBM surface           ▼
   ╭──────────────────────╮    │      ╭────────────────────────────────╮
   │ Line segment between │    │      │ Compute shortest path in 3D    │
   │  A' and B' as path   │    │      │ between A' and B' avoiding PBM │
   ╰──────────────────────╯    ▼      ╰────────────────────────────────╯
                          ◇─────────────◇
                 ┌───────╱ Choose surface ╲───────┐
 Shortest path on│       ╲  path type     ╱       │ Shortest path
 PBM surface     │        ◇─────┬────────◇        │ on edges or other
                 │              │                  │ 1D subsets
                 ▼   Intersection of PBM           ▼
   ╭──────────────╮  with a plane      ╭───────────────────────╮
   │   Compute    │        │           │  Compute shortest path│
   │   shortest   │        ▼           │ on 1-dimensional subset│
   │ surface path │ ┌──────────────┐   ╰───────────────────────╯
   ╰──────────────╯ │  Determine   │
                    │ intersection │
                    │ plane        │
                    │ definition   │
                    │ from PBM     │
                    │ containing   │
                    │ A' and B'    │
                    └──────┬───────┘
                           ▼
                    ┌──────────────┐
                    │   Compute    │
                    │ intersection │
                    │ between plane│
                    │  and PBM     │
                    └──────┬───────┘
                           ▼
                    ┌──────────────┐
                    │  Determine   │
                    │  subset of   │
                    │ intersection │
                    │ defining the │
                    │    path      │
                    └──────┬───────┘
                           ▼
                    ╭──────────────╮
                    │ Compute path │
                    │  on subset   │
                    ╰──────────────╯
```

Europäisches
Patentamt

European
Patent Office

Office européen
des brevets

## EUROPEAN SEARCH REPORT

Application Number

EP 21 17 0737

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/049811 A1 (FEDYUKOV MAXIM ALEXANDROVICH [RU] ET AL) 18 February 2021 (2021-02-18) * Secctions 2-5 * ----- | 1-15 | INV. G06T7/62 |
| A | EP 3 772 040 A1 (REACTIVE REALITY AG [AT]) 3 February 2021 (2021-02-03) * the whole document * ----- | 1-15 | |
| A | US 2018/240280 A1 (CHEN YU [GB] ET AL) 23 August 2018 (2018-08-23) * the whole document * ----- | 1-15 | |

TECHNICAL FIELDS
SEARCHED (IPC)

G06T

The present search report has been drawn up for all claims

| Place of search | Date of completion of the search | Examiner |
|---|---|---|
| Munich | 12 October 2021 | Tillier, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 21 17 0737

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2021

| Patent document cited in search report | | | Publication date | Patent family member(s) | | | Publication date |
|---|---|---|---|---|---|---|---|
| US 2021049811 | A1 | | 18-02-2021 | RU | 2019125602 | A | 15-02-2021 |
| | | | | US | 2021049811 | A1 | 18-02-2021 |
| | | | | US | 2021082179 | A1 | 18-03-2021 |
| | | | | US | 2021082180 | A1 | 18-03-2021 |
| | | | | WO | 2021028728 | A1 | 18-02-2021 |
| EP 3772040 | A1 | | 03-02-2021 | EP | 3772040 | A1 | 03-02-2021 |
| | | | | WO | 2021018894 | A1 | 04-02-2021 |
| US 2018240280 | A1 | | 23-08-2018 | EP | 3335197 | A1 | 20-06-2018 |
| | | | | GB | 2546572 | A | 26-07-2017 |
| | | | | KR | 20180069786 | A | 25-06-2018 |
| | | | | US | 2018240280 | A1 | 23-08-2018 |
| | | | | WO | 2017029487 | A1 | 23-02-2017 |

EPO FORM P0459

For more details about this annex : see Official Journal of the European Patent Office, No. 12/82